# EUROPEAN PATENT APPLICATION

(11) **EP 4 191 183 A2**
(43) Date of publication of application: **07.06.2023**
(21) Application number: 22196379.6
(22) Date of filing: 19.09.2022
(51) Int. Cl.: F27B 9/20, F27B 9/40, F27D 99/00, F27D 3/00

(54) **WALKING-BEAM TYPE HEATING FURNACE**

(30) Priority: 06.12.2021 JP 2021197502
(71) Applicant: Chugai Ro Co., Ltd., Osaka-shi Osaka 541-0046 (JP)
(72) Inventor: IWAMOTO, Tadahiro, Osaka, 541-0046 (JP)
(74) Representative: Glawe, Delfs, Moll

(57) **Abstract**

In a walking beam type heating furnace where a hearth 11 is formed with driving through-holes 11a through which driving support pillars 31 of a driving beam 30 are extended, where a sealing member 14 is applied to a periphery of the driving through-hole and immersed in water x in a trough 50, and where a driving mechanism 40 drives driving beams into a walking motion via a driving frame 41 so as to convey a workpiece W, a resistive sensor 61 for breakage detection is provided for the detection of change in electric resistance value of the sealing member.

## Description

### Technical Field

The present invention relates to a walking beam type heating furnace where plural lines of fixed beams and plural lines of driving beams are extended in a furnace length direction and arranged in a furnace width direction at required space intervals. A driving frame is driven by means of a driving mechanism disposed under a hearth so as to bring the individual lines of driving beams into a walking motion. Thus, workpieces charged into the heating furnace are heat treated as sequentially conveyed through the furnace. Particularly, the invention features the following configurations and functions. That is, each line of driving beam is provided with a plurality of driving support pillars which are arranged in the furnace length direction at required space intervals and are extended downward therefrom. The hearth is formed with driving through-holes in correspondence to the respective driving support pillars of the driving beam in each line. A trough containing water therein is disposed on the driving frame and extended along the furnace length direction. The driving support pillars of the driving beam in each line are extended through the driving through-holes to be supported on the driving frame via the trough containing water therein. Further, a sealing member is applied to a periphery of each of the driving through-holes in a manner to be immersed in the water in the trough. During heating treatment when the driving mechanism drives the individual driving beams into the walking motion via the above-described driving frame so as to convey the workpieces one after the other for heating treatment, the invention is characterized in that the occurrence of breakage such as crazing and cracks in the sealing member of a water sealing mechanism applied to the periphery of the respective driving through-holes and immersed in the water in the trough can be quickly detected.

### Background Art

The walking beam type heating furnace has heretofore been known as a heating furnace which is designed to continuously heat treat the workpieces such as steel slabs and sheet steel by sequentially moving the workpieces through the heating furnace.

As disclosed in Patent Documents 1 and 2, the following heating furnace is generally used as such a walking beam type heating furnace. In the heating furnace, plural lines of fixed beams and plural lines of driving beams are arranged in the furnace width direction at required space intervals. The driving mechanism disposed under the hearth drives the driving frame so as to bring the individual lines of driving beams into the walking motion. Thus, the workpieces charged into the heating furnace are sequentially conveyed therethrough for heating treatment.

The foregoing walking beam type heating furnace is configured as follows. In order to drive the respective lines of driving beams into the walking motion by means of the driving mechanism disposed under the hearth, the driving beam in each line is provided with a plurality of driving support pillars extended downward therefrom and arranged in the furnace length direction at required space intervals. The above-described hearth is formed with the driving through-holes in correspondence to the respective driving support pillars of the driving beam in each line. Further, the trough containing the water therein is disposed on the driving frame and along the furnace length direction. The driving support pillars of the driving beam in each line are extended through the above-described driving through-holes to be supported on the above-described driving frame via the trough containing the water therein. In order to prevent the gas in the heating furnace from leaking out through the driving through-holes or to prevent the outside air from invading the heating furnace, the water sealing mechanism is provided with the sealing member applied to the periphery of the above-described driving through-hole and immersed in the water in the trough. The driving mechanism drives the individual driving beams into the walking motion via the driving frame provided with the trough. Thus, the workpieces are sequentially conveyed through the heating furnace and heat treated.

The foregoing walking beam type heating furnace has the following problem. In a case where the driving mechanism drives the driving beams into the walking motion via the driving frame provided with the trough containing water, the sealing member applied to the periphery of the driving through-hole and immersed in the water of the trough is moved up and down relative to the trough so that the sealing member immersed in the water of the trough is varied in immersion depth. Particularly, a boundary area where the sealing member is immersed into the water of the trough or lifted out of the water of the trough is subjected to stress due to temperature changes.

If the operations as described above are repeated in the above-described walking beam type heating furnace, particularly in the case where the sealing member is metallic, the sealing member may be corroded or degraded or may sustain damage such as crazing and cracks due to the stress induced by the temperature changes. This leads to the leakage of an atmosphere gas in the heating furnace to the outside or the inflow of the outside air into the heating furnace through such a damaged area. As a result, the heating treatment of the workpieces is adversely affected. Furthermore, it is extremely difficult to detect an occurrence or a site of such damages on the sealing member during the operation of the walking beam type heating furnace.

### Citation List

### Patent Documents

Patent Document 1: JP-A No.2013-119629
Patent Document 2: JUM-A No.S63(1988)-13237

### Disclosure of Invention

### Technical Problem

It is an object of the invention to solve the above-described problem encountered by the above-described walking beam type heating furnace which includes: plural lines of fixed beams and plural lines of driving beams extended in a furnace length direction and arranged in a furnace width direction at required space intervals; a plurality of driving support pillars extended downward from the driving beam in each line as arranged in the furnace length direction at required space intervals; driving through-holes formed in the hearth in correspondence to the respective driving support pillars of the driving beam in each line; and a trough containing water therein and disposed on a driving frame in conformity with the furnace length direction, and has an arrangement wherein
each driving support pillar of the driving beam in each line is supported on the driving frame driven by the driving mechanism via the trough containing water from each of the driving through-holes, and a water sealing mechanism where the sealing member applied to the periphery of the driving through-hole is immersed in the water in the trough is provided, and the driving mechanism drives the individual driving beams into the walking motion via the driving frame, so as to sequentially conveying the workpieces through the furnace for heating treatment.

That is, according to the walking beam type heating furnace of the invention, the object of the invention is to provide simple and quick detection of developing breakage such as crazing and cracks in the sealing member, an occurrence of such breakage, or a site thereof when the driving mechanism drives the driving beams into the walking motion via the driving frame so as to convey the workpieces one after the other through the heating furnace for heating treatment.

### Solution to Problem

According to an aspect of the invention for achieving the above object, a walking beam type heating furnace includes: plural lines of fixed beams and plural lines driving beams extended in a furnace length direction and arranged in a furnace width direction at required space intervals; and a driving frame driven by a driving mechanism disposed under a hearth so as to bring the lines of driving beams into a walking motion for conveying one after the other workpieces charged into the heating furnace for heating treatment, and has a configuration wherein
the lines of driving beams are each provided with plural driving support pillars which are extended downward and arranged in a furnace length direction at required space intervals, while the hearth is formed with driving through-holes in correspondence to the respective driving support pillars of the driving beam in each line,
a trough containing water therein is mounted on the driving frame along the furnace length direction, while each of the driving support pillars at the driving beam in each line is supported to upstand on the driving frame via each driving through-hole and the trough containing water therein,
a sealing member is applied to a periphery of each of the driving through-holes in a manner to be immersed in the water of the trough, and
a resistive sensor for breakage detection, which detects change in electric resistance value of the sealing member, is mounted to each of the sealing members.

In a case where the above-described sealing member is made of metal or an electrically conductive material, the area of a cross section of the sealing member decreases when the breakage such as crazing and cracks starts to occur. Therefore, the electric resistance value of the sealing member varies during current conduction.

The walking beam type heating furnace according to the invention is adapted to detect the occurrence of breakage by taking advantage of the above-described characteristics. In a case where the above-described driving mechanism drives the driving beams into the walking motion by means of the driving frame provided with the trough, so as to convey the workpieces one after the other through the heating furnace for heating treatment, the sealing member applied to the periphery of the driving through-hole to be immersed in the water contained in the trough is moved up and down relative to the trough so that the sealing member is varied in immersed depth in the water. Hence, the sealing member is subjected to stress due to temperature changes. When the sealing member suffers damages, such as crazing and cracks, so that the electric resistance value thereof varies, the change in the electric resistance value is detected by the above-described resistive sensor mounted to the sealing member. Thus, the occurrence of damage in the sealing member is detected.

In the walking beam type heating furnace according to the invention, at least two electrodes, as the above-described resistive sensors, for detecting the electric resistance value of the sealing member can be mounted to the sealing member at places horizontally spaced apart by a required distance along the water surface of the trough. An electric resistance value between these electrodes can be determined. Therefore, a simple structure is usable for measuring the electric resistance value. It is noted that the number of electrodes horizontally arranged at required space intervals is not particularly limited. It is also possible to arrange the electrodes on the whole periphery of the sealing member.

In the walking beam type heating furnace according to the invention, at least the two electrodes for determining the electric resistance value of the sealing member are disposed on the sealing member at places alongside of the water surface of the trough and horizontally spaced apart by a required distance, as follows. It is preferred to mount at least the two electrodes to the sealing member as follows. In a case where the trough is elevated by the walking motion driven by the driving frame, these two electrodes are preferably located below a level of the water surface of the elevated trough. In a case where the trough is lowered, on the other hand, these two electrodes are preferably located above a level of the water surface of the lowered trough. The reason for this is explained as follows. In a boundary area where the sealing member is immersed in the water in the trough or lifted out of the water by the walking motion driven by the driving frame, the stress on the sealing member is increased due to the temperature fluctuations so that the sealing member becomes susceptible to breakage. This results in the increased need for checking for and detecting the breakage.

In the walking beam type heating furnace according to another aspect of the invention, at least the two electrodes, as the above-described resistive sensors, for detecting the electric resistance value of the sealing member can also be arranged in plural lines vertically spaced apart by a required distance on the sealing member. In each line, the electrodes are arranged alongside of the water surface of the trough and horizontally spaced apart by a required distance. This arrangement permits the electrodes to detect the occurrence of breakage of the sealing member even though such electrodes are spaced apart from the above-described boundary area of the sealing member.

In the walking type heating furnace according to the invention, a temperature sensor for detecting the temperature of the sealing member can be disposed in vicinity of the above-described resistive sensors for breakage detection such that the above resistive sensor can determine the electric resistance value at a temperature defined by the temperature sensor. It is noted here that the temperature of the sealing member varies constantly in conjunction with the rise or fall of the level of the water surface in the trough, and the electric resistance value also varies in conjunction with the temperature fluctuations. In a case where the temperature sensor for detecting the temperature of the sealing member is disposed in vicinity of the resistive sensor for breakage detection, temperature data can be extracted at the same temperature at which the electric resistance value is obtained. Thus, an accurate threshold value for the electric resistance value based on which the occurrence of breakage in the sealing member is determined.

In a case where the temperature of the sealing member varies in the range of 40°C to 60°C, for example, a data piece on the electric resistance value obtained at 50°C can be extracted and compared with the threshold value. In a case where the temperature of the sealing member varies in the range of 40°C to 60°C, the electric resistance value can be measured more than once at each of the temperatures 40°C, 50°C and 60°C.

The temperature of the sealing member is assumed to be substantially the same in the horizontal direction despite the rise or fall of the level of water surface. Therefore, if the temperature sensor is disposed on the same horizontal line as the line where the electrodes are arranged, an electric resistance value between any pair of electrodes can be calculated based on a temperature determined by the temperature sensor. This results in accurate detection of a breakage occurrence.

### Effects of Invention

The walking beam type heating furnace according to the invention affords the following effects. In a case where the driving mechanism drives the individual driving beams into the walking motion via the above-described driving frame provided with the trough so as to convey the workpieces one after the other through the heating furnace for heating treatment, the sealing member applied to the periphery of the driving through-hole in a manner to be immersed in the water contained in the trough is moved up and down relative to the trough. Thus, the sealing member is varied in the immersed depth in the water contained in the trough, so that the sealing member is subjected to the stress due to the temperature fluctuations and sustains breakage such as crazing and cracks. In response to the change in the electric resistance value at the damaged area of the sealing member, the above-described resistive sensor mounted to the sealing member detects the occurrence of breakage.

According to the walking beam type heating furnace of the invention, developing breakage such as crazing and cracks in the sealing member, an occurrence of such breakage or a site thereof can be detected by the above-described resistive sensor in a simple and rapid manner when the driving mechanism drives the driving beams into the walking motion via the driving frame so as to convey the workpieces one after the other through the heating furnace for heating treatment.

### Brief Description of Drawings

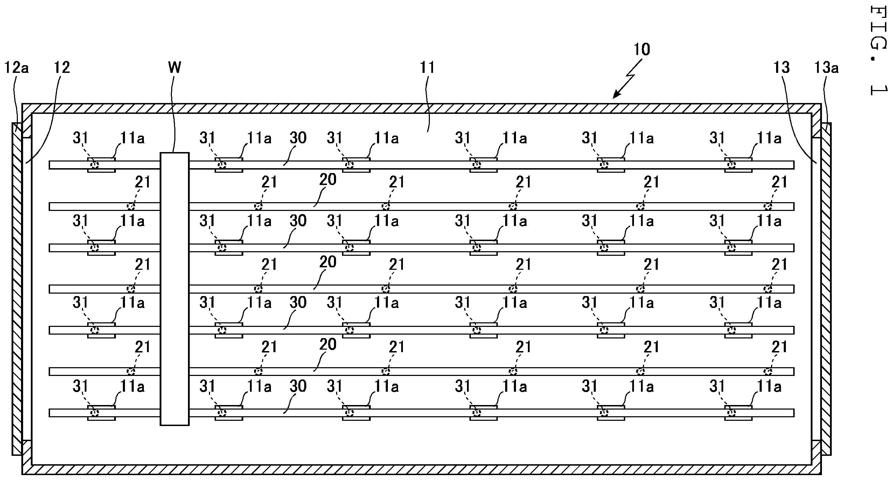

Fig. 1 is a schematic sectional view of a walking beam type heating furnace according to one embodiment of the invention, illustrating a state where plural lines of fixed beams and plural lines of driving beams are arranged for conveying a workpiece in the heating furnace;

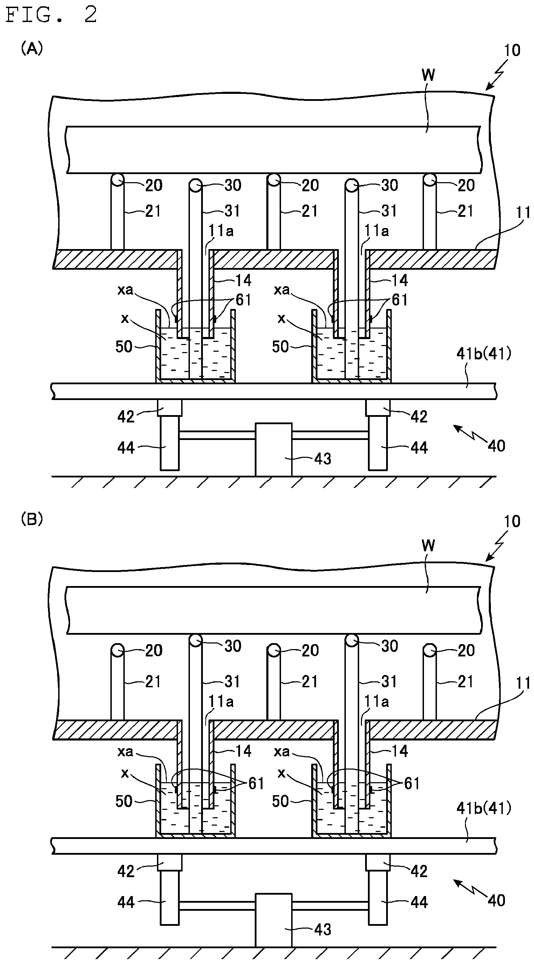

Fig. 2 shows the walking beam type heating furnace applied to the above embodiment where a driving mechanism drives the driving beams into a walking motion for conveying the workpiece in the heating furnace, and includes Fig. 2(A) as a schematic sectional view illustrating a state, as seen in a direction orthogonal to a direction of conveying the workpiece, where the driving beams are lowered to allow the fixed beams to retain the workpiece thereon, and Fig. 2(B) as a schematic sectional view illustrating a state, as seen in the direction orthogonal to the direction of conveying the workpiece, where the driving beams are elevated to retain thereon the workpiece which was retained on the fixed beams;

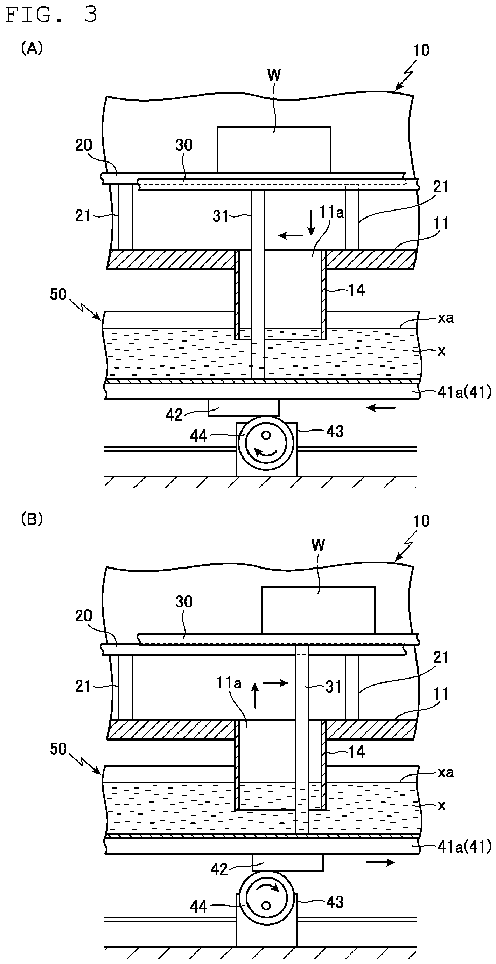

Fig. 3 shows the walking beam type heating furnace applied to the above embodiment where the driving mechanism drives the driving beam into the walking motion for conveying the workpiece in the heating furnace, and includes Fig. 3(A) as a schematic sectional view illustrating a state, as seen in the direction of conveying the workpiece, where the driving beam is lowered to allow the fixed beam to retain the workpiece thereon, and Fig. 3(B) as a schematic sectional view illustrating a state, as seen in the direction of conveying the workpiece, where the driving beam is elevated to retain and carry the workpiece thereon, which was retained on the fixed beam;

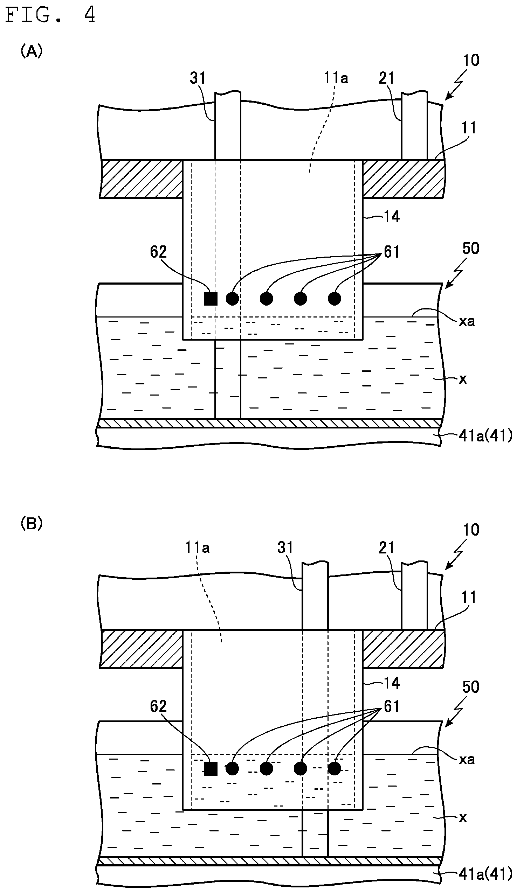

Fig. 4 shows the walking beam type heating furnace applied to the above embodiment where a plurality of electrodes, as resistive sensors for detecting an electric resistance value of the sealing member applied to the periphery of the driving through-hole and immersed in the water in the trough, are horizontally arranged in a line on a side surface of the sealing member along the conveying direction, at required space intervals and along the water surface of the trough, and a temperature sensor for measuring the temperature of the trough is located at a horizontal position in vicinity of the line of electrodes, and includes Fig. 4(A) as a schematic side view illustrating a positional relation between the resistive sensors and the water surface of the trough in a state where the driving beam is lowered, and Fig. 4(B) as a schematic side view illustrating a positional relation between the resistive sensors and the water surface of the trough in a state where the driving beam is elevated; and

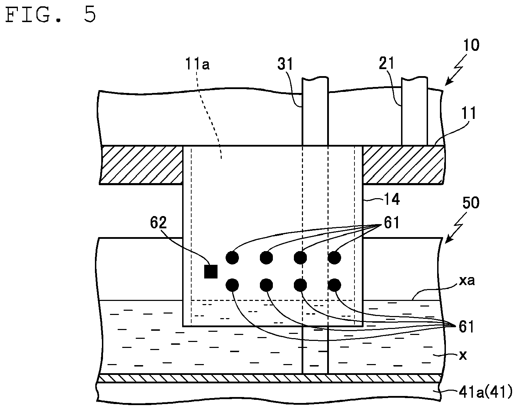

Fig. 5 is a schematic side view of the walking beam type heating furnace applied to the above embodiment, illustrating a state where a plurality of electrodes as resistive sensors for detecting an electric resistance value of the sealing member are arranged in two lines on a side surface of the sealing member along the conveying direction, at required horizontal space intervals and along the water surface of the trough, the two lines vertically spaced apart by a required distance, and the temperature sensor for measuring the temperature of the trough is disposed at place between the two lines of electrodes.

### Description of Embodiment

The walking beam type heating furnace according to the embodiment of the invention will hereinbelow be described in detail with reference to the accompanying drawings. It is noted here that the walking beam type heating furnace according to the invention is not limited to the following embodiment but may also be embodied in other specific forms without departing from the spirit or essential characteristics thereof.

In the walking beam type heating furnace according to the embodiment, as shown in Fig. 1, plural lines of fixed beams 20 and plural lines of driving beams 30 are extended in a furnace length direction from a charging port 12 for charging a workpiece W into the heating furnace 10 to a discharge port 13 for discharging the heat-treated workpiece W from the heating furnace 10. The fixed beams and the driving beams are alternately arranged on a hearth 11 of the heating furnace 10 at required space intervals in the furnace width direction. The charging port 12 is provided with a charging door 12a for opening/closing the charging port 12. The discharge port 13 is provided with a discharge door 13a for opening/closing the discharge port 13.

In this heating furnace 10, individual lines of fixed beams 20 are installed as follows. As shown in Figs. 2(A) and 2(B), Figs. 3(A) and 3(B), a plurality of fixing support pillars 21 are installed upright at places in the furnace length direction and furnace width direction at required space intervals. The fixed beams 20 extended in the furnace length direction are each disposed on each line of fixing support pillars 21 arranged in the furnace length direction.

On the other hand, individual lines of driving beams 30 are installed as follows. A plurality of driving support pillars 31, which are arranged along the driving beam 30 in each line at required space intervals, are extended downward from the driving beam 30 in each line. Further, driving through-holes 11a are formed in the hearth 11 in correspondence to the respective driving support pillars 31 on the driving beam 30 in each line. The driving support pillars 31 of each driving beam 30 are allowed to extend through the driving through-holes 11a to place under the hearth 11. It is noted that each of the driving through-sholes 11a is formed large enough to avoid collision with the driving support pillar 31 when the driving beam 30 makes the walking motion.

Disposed under the hearth 11 is a rectangular driving frame 41 driven by a driving mechanism 40. The driving frame has a rectangular shape, including: a plurality of frame bars 41a extended in the furnace length direction and arranged in the furnace width direction at required space intervals; and a plurality of frame beams 41b extended in the furnace width direction and arranged in the furnace length direction at required space intervals. On the driving frame 41, plural lines of troughs 50 containing water x therein are arranged along the furnace length direction, in a manner to correspond to the lines of driving beams 30, and at required space intervals in the furnace width direction.

Furthermore, the driving support pillar 31 extended from the driving beam 30 through the driving through-hole 11a to place under the hearth 11 is supported to upstand on the driving frame 41 via the trough 50 disposed in correspondence to the driving beam 30 in each line.

A sealing member 14 is applied to a periphery of the driving through-hole 11a and immersed in water x contained in the trough 50. Thus, the sealing member prevents the gas in the heating furnace 10 from leaking out through each driving through-hole 11a or prevents the outside air from invading into the heating furnace 10.

In the walking beam type heating furnace according to the embodiment, the driving mechanism 40 drives the above-described driving frame 41 so as to bring the individual driving beams 30 into the walking motion. Namely, the driving beams, supported by the driving frame 41 via the individual troughs 50, reciprocate in the vertical direction and in the furnace length direction. The workpieces W charged into the heating furnace 10 through the charging port 12 are sequentially conveyed toward the discharge port 13 as carried on the above-described fixed beams 20. The workpieces W are heat treated in the heating furnace 10.

The walking beam type heating furnace according to the embodiment is configured as follows so that the driving mechanism 40 drives the driving frame 41 in a manner that the individual driving beams make the walking motion by reciprocating in the vertical direction and the furnace length direction. As shown in Fig. 2(A), Fig. 2(B), Fig. 3(A) and Fig. 3(B), plural pairs of support members 42 project downward from an underside of the driving frame 41 and are opposed to each other in the furnace width direction via a required space therebetween. Those plural pairs of support members 42 are arranged in the furnace length direction at required space intervals. The support members 42 projected downward from the driving frame 41 are carried on a pair of eccentric cams 44 rotated by a rotatable device 43 as vertically decentered. These eccentric cams 44 are eccentrically rotated by the rotatable device 43 so as to vertically reciprocate the driving frame 41. On the other hand, a reciprocating cylinder (not shown) extendable in the furnace length direction is connected to an edge of one side of the driving frame 41. This reciprocating cylinder reciprocates the driving frame 41 in the furnace length direction.

According to this embodiment, a plurality of electrodes 61, as resistive sensors 61 for detecting change in electric resistance value of the sealing member 14 for breakage detection, are mounted on the sealing member as horizontally arranged along a water surface xa of the trough 50. In addition, a temperature sensor 62 for detecting the temperature of the sealing member 14 at a neighboring site of the electrodes is disposed at the same horizontal position as the line of electrodes 61 arranged just as described. It is noted that illustrations of the wirings, insulation, waterproof measures, power source, controller and the like are dispensed with.

According to the embodiment, the plural electrodes 61 and the temperature sensor 62 are mounted to the sealing member 14 along the horizontal line of the water surface xa of the trough 50 in the following manner. In the case where the driving frame 41 provided with the trough 50 is brought into the walking motion by the driving mechanism 40, as shown in Fig. 4(A) and Fig. 4(B), the plural electrodes 61 and the temperature sensor 62 are located below the level of water surface xa of the trough 50 when the trough 50 is elevated. On the other hand, the plural electrodes 61 and the temperature sensor 62 are located above the level of water surface xa of the trough 50 when the trough 50 is lowered.

In a boundary area where the sealing member is immersed in the water x in the trough 50 or lifted out of the water x when the driving frame 41 with the trough 50 mounted thereon is brought into the walking motion, the sealing member is subjected to significant temperature fluctuations and stress increased by the temperature fluctuations. Hence, the sealing member 14 becomes prone to sustain damage. In the state where the trough 50 is elevated, therefore, the plural electrodes 61 and the temperature sensor 62 are located below the level of water surface xa of the trough 50, as described above. In the state where the trough 50 is lowered, on the other hand, the plural electrodes 61 and the temperature sensor 62 are located above the level of water surface xa of the trough 50. A numerical value determined by the temperature sensor 62 under the same temperature condition is extracted, so as to detect a change in the electric resistance value of the sealing member 14 by means of the plural electrodes 61. Thus, the occurrence of breakage in the sealing member 14 is detected. This approach provides accurate and quick detection of breakage in the sealing member 14 at an area subjected to a significant stress due to the temperature change.

In a case where three or more electrodes 61 are disposed to detect an electric resistance value between a respective pair of electrodes, the electrodes 61 opposed to each other across a damaged area indicate a large change in the electric resistance value. This serves as a rough indication of the existence of a damaged area in the horizontal direction, even though such a damaged area may be hard to recognize visually.

According to this embodiment, a simple configuration is made such that the plural electrodes 61 are merely arranged in one horizontal line along the water surface xa of the trough 50, while the electrodes are located below the level of water surface xa of the trough 50 in the state where the trough 50 is elevated, and the electrodes are located above the level of water surface xa of the trough 50 in the state where the trough 50 is lowered. As shown in Fig. 5,in place of one line of the plural electrodes 61 horizontally arranged along the water surface xa of the trough 50, the electrodes 61 can be arranged in two lines vertically spaced apart by a required distance. Further, the temperature sensor 62 can be disposed between the two lines of electrodes.

This arrangement offers the following advantage. Even at a short distance away from the boundary area where the sealing member 14 is immersed in or lifted out of the water x in the trough 50, a numerical value determined by the temperature sensor 62 under the same temperature condition is extracted, while change in the electrical resistance value of the sealing member 14 is detected by the two lines of electrodes 61. Thus, the occurrence of breakage in the sealing member 14 can be detected accurately and quickly.

This approach is adapted for the detection of the damaged area not only in the above-described horizontal direction but also in the vertical direction when the electric resistance values between the respective pairs of electrodes 61 are determined.

In the detection of the electric resistance value, it is more preferred to detect the electrical resistance value in a state where the temperature sensor 62 is lifted out of the water x. This is because if the temperature sensor 62 is immersed in the water x, it is feared that the current between the electrodes 61 could also flow through the water x, resulting in instable electric resistance value.

### Reference Signs List

- 10:: heating furnace
- 11:: hearth
- 11a:: driving through-hole
- 12:: charging port
- 12a:: charging door
- 13:: discharge port
- 13a:: discharge door
- 14:: sealing member
- 20:: fixed beam
- 21:: fixing support pillar
- 30:: driving beam
- 31:: driving support pillar
- 40:: driving mechanism
- 41:: driving frame
- 41a:: frame bar
- 41b:: frame beam
- 42:: support member
- 43:: rotatable device
- 44:: eccentric cam
- 50:: trough
- 61:: electrode (resistive sensor)
- 62:: temperature sensor
- W:: workpiece
- X:: water
- Xa:: water surface

## Claims

1. A walking beam type heating furnace comprising:
plural lines of fixed beams and plural lines of driving beams extended in the heating furnace in a furnace length direction and arranged in a furnace width direction at required space intervals, and
a driving frame driven by a driving mechanism disposed under a hearth so as to bring the individual lines of driving beams into a walking motion for conveying one after the other workpieces charged into the heating furnace for heating treatment, wherein
each line of driving beam is provided with plural driving support pillars extended downward at required space intervals in the furnace length direction, while the hearth is formed with driving through-holes in correspondence to the driving support pillars of the driving beam in each line,
a trough containing water therein is disposed on the driving frame along the furnace length direction while the individual driving support pillars at the driving beam in each line extend through the driving through-holes and are supported to upstand on the driving frame via the troughs containing water therein,
a sealing member is applied to a periphery of each of the driving through-holes in a manner to be immersed in the water in the trough, and
a resistive sensor for breakage detection, which detects change in electric resistance value of the sealing member, is mounted to each of the sealing members.

2. The walking beam type heating furnace according to Claim 1, wherein
at least two electrodes as the resistive sensors for detecting the electric resistance value of the sealing member are mounted to the sealing member in a manner that the electrodes are horizontally spaced apart by a required distance along a water surface of the trough.

3. The walking beam type heating furnace according to Claim 2, wherein
at least the two electrodes as the resistive sensors for detecting the electric resistance value of the sealing member are mounted to the sealing member in a manner that the electrodes are located at places below a level of the water surface of the trough in a case where the trough is elevated by the walking motion of the driving frame, and that the electrodes are located at places above the level of the water surface of the trough in a case where the trough is lowered.

4. The walking beam type heating furnace according to Claim 2, wherein
at least the two electrodes as the resistive sensors for detecting the electric resistance value of the sealing member are mounted to the sealing member in a manner that the electrodes are arranged in a line along the water surface of the trough and are horizontally spaced apart by a required distance, and that the electrodes are arranged in plural lines vertically spaced apart from each other.

5. The walking beam type heating furnace according to any one of Claims 1 to 4, wherein
a temperature sensor for detecting the temperature of the sealing member is disposed in vicinity of the resistive sensor for breakage detection so that an electric resistance value at a temperature defined by the temperature sensor is measured by the resistive sensor.

6. The walking beam type heating furnace according to Claim 2, wherein a temperature sensor for detecting a temperature of the sealing member is disposed on the same horizontal line that interconnects at least the two electrodes horizontally arranged as the resistive sensors.
